# EUROPEAN PATENT SPECIFICATION

(11) **EP 3 131 079 B1**
(45) Date of publication and mention of the grant of the patent: **29.04.2020**
(21) Application number: 16161699.0
(22) Date of filing: 22.03.2016
(51) Int. Cl.: G08C 17/02

(54) **HOME APPLIANCE CONTROL METHOD AND DEVICE, COMPUTER PROGRAM AND RECORDING MEDIUM**
HAUSHALTSGERÄTESTEUERUNGSVERFAHREN UND -VORRICHTUNG, COMPUTERPROGRAMM UND AUFZEICHNUNGSMEDIUM
PROCÉDÉ DE COMMANDE D'UN APPAREIL DOMESTIQUE, DISPOSITIF, PROGRAMME INFORMATIQUE ET SUPPORT D'ENREGISTREMENT

(30) Priority: 13.08.2015 CN 201510498532
(43) Date of publication of application: 15.02.2017
(73) Proprietor: Xiaomi Inc., Beijing 100085 (CN)
(72) Inventor: HOU, Enxing, Beijing 100085 (CN); MENG, Deguo, Beijing 100085 (CN); HEI, Lijun, Beijing 100085 (CN)
(74) Representative: Loustalan, Paul William

(56) References cited:
- WO-A1-2005/015519
- GB-A- 2 465 629
- US-A1- 2005 094 610
- US-A1- 2011 309 933

## Description

### TECHNICAL FIELD

The present disclosure generally relates to appliance control, and more particularly, to a home appliance control method and device, a computer program and a recording medium.

### BACKGROUND

With the continuous development of electronic technology, there are an increasing number of and a greater variety of home appliances for daily use in houses. Sometimes, a house has multiple rooms furnished with the same kind of home appliances (e.g. air-conditioners, air purifiers, air moisteners, etc.). In such a case, in order for the same kind of appliances to operate in the same mode, a user will have to adjust operation modes of these home appliances one by one. This process is troublesome because operating modes of modern home appliances involve an increasing number of parameters.

For example, GB 2465629 A discloses a temperature control system with wireless communication to a remote user interface. The remote user interface enables control of the temperature control system using the internet, cellular communications network or short range radio frequency.

US 2011/0309933 A1 discloses a system and method for determining the relative location of a portable device within a home. The location may be used for adjusting a setting on the portable device, identifying another device to be controlled by a portable remote control, or the like.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present disclosure solves the above problems by providing home appliance control methods and devices, a computer program and a recording medium.

According to a first aspect of the present invention, there is provided a home appliance control method. The method is applied to a wearable device, and comprises: receiving operation mode information from a home appliance, wherein the operation mode information indicates a current operation mode of the home appliance; and sending the operation mode information to another home appliance to cause said another home appliance to operate in the operation mode, wherein said another home appliance and said home appliance are a same kind of home appliance and operate in the operation mode.

According to a second aspect of the present disclosure, there is provided a home appliance control method. The method is applicable to a home appliance, and comprises: sending operation mode information to a wearable device, wherein the operation mode information indicates a current operation mode of the home appliance, and the operation mode information is sent by the wearable device to another home appliance to cause said another home appliance to operate in the operation mode.

According to a further aspect of the present invention, there is provided a home appliance control device. The device is a wearable device, and comprises: a first receiving module configured to receive operation mode information from a home appliance, wherein the operation mode information indicates a current operation mode of the home appliance; and a first sending module configured to send the operation mode information to another home appliance to cause said another home appliance to operate in the operation mode, wherein said another home appliance and said home appliance are a same kind of home appliance and operate in the operation mode.

According to a further aspect of the present disclosure, there is provided a home appliance control device. The device is applicable to a home appliance, and comprises: a fourth sending module configured to send operation mode information to a wearable device, wherein the operation mode information indicates a current operation mode of the home appliance, and the operation mode information is sent by the wearable device to another home appliance to cause said another home appliance to operate in the operation mode.

According to a yet further aspect of the present disclosure, there is provided a home appliance control device. The device comprises: a processor; a memory storing instructions executable by the processor; wherein the processor is configured to: receive operation mode information from a home appliance, wherein the operation mode information indicates a current operation mode of the home appliance; and send the operation mode information to another home appliance to cause said another home appliance to operate in the operation mode.

According to an still further aspect of the present disclosure, there is provided a home appliance control device. The device comprises: a processor; a memory containing instructions executable by the processor; wherein the processor is configured to: send operation mode information to a wearable device, wherein the operation mode information indicates a current operation mode of a home appliance, and the operation mode information is sent by the wearable device to another home appliance to cause said another home appliance to operate in the operation mode.

According to a yet still further aspect, the present disclosure provides a device for controlling a home appliance. The device comprises: a processor; a memory storing instructions executable by the processor; wherein the processor is configured to: receive operation mode information from a wearable device, wherein the operation mode information indicates an operation mode; and to operate in the operation mode.

The technical solutions provided by the embodiments of the present disclosure may have the following advantageous effects:
By implementing the home appliance methods and devices described in the present disclosure, a wearable device may be configured to receive from a home appliance operation mode information and then send the same to another home appliance to cause said another home appliance to operate in the operation mode. This enables multiple home appliances in a user's house to operate in the same operation mode without having to adjust operation modes of the home appliances one by one, thereby simplifying the user's operations.

In one particular embodiment, the steps of the home appliance control method are determined by computer program instructions.

Consequently, according to a further aspect, the invention is also directed to a computer program for executing the steps of a home appliance control method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram showing an implementation environment according to an exemplary embodiment;
Fig. 2 is a flow chart showing a method for controlling a home appliance according to an exemplary embodiment;
Fig. 3 is a diagram of a scenario for implementing a method for controlling a home appliance according to an exemplary embodiment;
Fig. 4 is a flow chart showing a method for controlling a home appliance according to another exemplary embodiment;
Fig. 5 is a flow chart showing a method for controlling a home appliance according to yet another exemplary embodiment;
Fig. 6 is a flow chart showing a method for controlling a home appliance according to yet another exemplary embodiment;
Fig. 7 is a flow chart showing a method for controlling a home appliance according to an exemplary embodiment;
Fig. 8 is a flow chart showing a method for controlling a home appliance according to another exemplary embodiment;
Fig. 9 is a flow chart showing a method for controlling a home appliance according to yet another exemplary embodiment;
Fig. 10 is a flow chart showing a method for controlling a home appliance according to yet another exemplary embodiment;
Fig. 11 is a flow chart showing a method for controlling a home appliance according to yet another exemplary embodiment;
Fig. 12 is a flow chart showing a method for controlling a home appliance according to another exemplary embodiment;
Fig. 13 is a flow chart of starting or stopping operation based on position information according to an exemplary embodiment;
Fig. 14 is a flow chart of starting or stopping operation based on position information according to another exemplary embodiment;
Figs. 15-18 are signaling diagrams each showing signaling exchanged between a home appliance and a wearable device for controlling the home appliance according to an exemplary embodiment;
Fig. 19 is a block diagram showing a device for controlling a home appliance according to an exemplary embodiment;
Fig. 20 is a block diagram showing a device for controlling a home appliance according to another exemplary embodiment;
Fig. 21 is a block diagram showing a device for controlling a home appliance according to yet another exemplary embodiment;
Fig. 22 is a block diagram showing a device for controlling a home appliance according to yet another exemplary embodiment;
Fig. 23 is a block diagram showing a device for controlling a home appliance according to an exemplary embodiment;
Fig. 24 is a block diagram showing a device for controlling a home appliance according to another exemplary embodiment;
Fig. 25 is a block diagram showing a device for controlling a home appliance according to yet another exemplary embodiment;
Fig. 26 is a block diagram showing a device for controlling a home appliance according to yet another exemplary embodiment;
Fig. 27 is a block diagram showing a device for controlling a home appliance according to yet another exemplary embodiment;
Fig. 28 is a block diagram showing a device for controlling a home appliance according to yet another exemplary embodiment;
Fig. 29 is a block diagram showing a second start-stop module according to an exemplary embodiment;
Fig. 30 is a block diagram showing a second start-stop module according to another exemplary embodiment; and
Fig. 31 is a block diagram showing a device for controlling a home appliance according to an exemplary embodiment.

### DETAILED DESCRIPTION

Reference will now be made in detail to certain embodiments, examples of which are illustrated in the accompanying drawings. The following description refers to the accompanying drawings in which the same numbers in different figures represent the same or similar elements unless otherwise indicated. The implementations set forth in the following description of embodiments do not represent all implementations consistent with the disclosure. Instead, they are merely examples of devices and methods consistent with aspects related to the disclosure as recited in the appended claims.

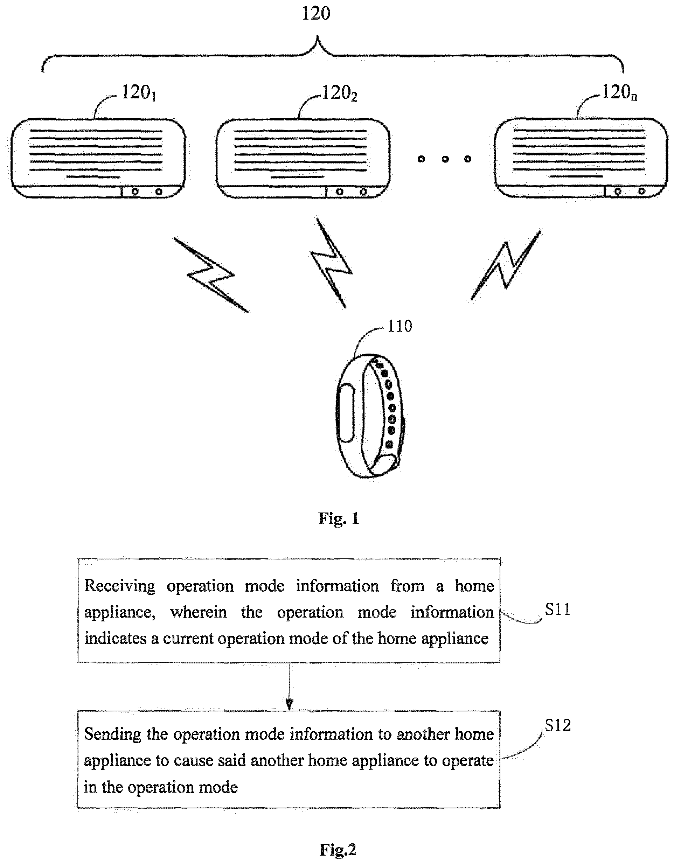

Fig. 1 is a schematic diagram showing an implementation environment according to an exemplary embodiment. Referring to Fig. 1, the implementation environment may include a wearable device 110 and a plurality of home appliances 120₁-120ₙ, wherein the wearable device 110 may communicate with the plurality of home appliances 120₁∼120ₙ through Bluetooth, WiFi, 2G, 3G or other wired or wireless communication technologies.

The wearable device 110 may be, for example, a smart bracelet, a smart watch, a smart ring or smart clothes. In Fig. 1, the wearable device 110 is shown as a smart bracelet.

The home appliances 120₁∼120ₙ can communicate with the wearable device 110, and may be, for example, air-conditioners, air purifiers or air moisteners. In Fig. 1, the home appliances 120₁∼120ₙ are shown as air-conditioners.

Fig. 2 is a flow chart showing a method for controlling a home appliance according to an exemplary embodiment. The method is applicable to a wearable device 110. As shown in Fig. 2, the method includes the following steps.

In step S11, operation mode information is received from a home appliance 120ₘ(*m* ∈ [1, *n*]*,* and m is a positive integer), wherein the operation mode information indicates a current operation mode of the home appliance 120ₘ.

The operation mode may include parameters needed for the home appliances 120₁∼120ₙ to operate, such as temperature, wind volume, timer, quiet mode and power level. The operation mode may be adjusted and controlled using a control panel on the home appliances 120₁∼120ₙ, or using a remote controller or other controlling means.

The operation mode information may be sent and received at various timings. For example, a wearable device 110 may send a request to a home appliance 120ₘ and receive the operation mode information which is sent by the home appliance 120ₘ in response to the request. Alternatively, the home appliance 120ₘ may initiatively send the operation mode information after its operation mode is changed, while the wearable device 110 may be configured to receive the operation mode information, either at a certain interval or continuously. Particularly, the wearable device 110 may be configured with a "receive" button and a "send" button, so that when the "receive" button is pressed, the wearable device 110 may receive from the home appliance 120ₘ the operation mode information. The specific manners for performing the sending and receiving the information may be implemented using any means commonly known in the art, and will not be elaborated herein.

In step S12, the operation mode information is sent to another home appliance 120ₚ(*p* ∈ [1, *n*], and p is a positive integer) to cause said another home appliance 120ₚ to operate in the operation mode.

The wearable device 110 may be bound to a plurality of home appliances 120₁∼120ₙ in advance. After the wearable device 110 sends operation mode information to said another home appliance 120ₚ, said another home appliance 120ₚ can operate in the operation mode defined by the operation mode information.

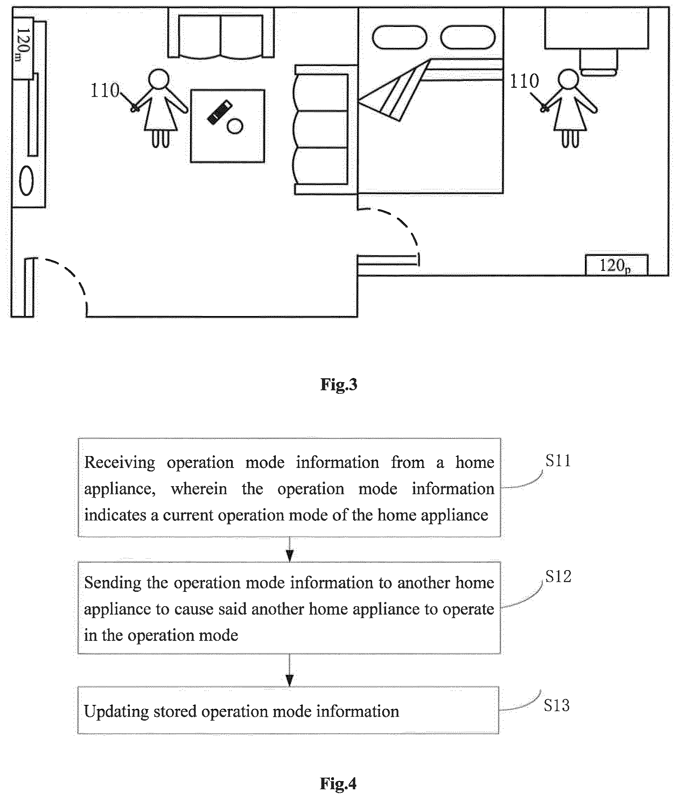

Fig. 3 is a diagram of a scenario for implementing a method for controlling a home appliance according to an exemplary embodiment. As shown in Fig. 3, a user wears a smart bracelet 110 in a house, an air-conditioner 120ₘ in the living room of the house and an air-conditioner 120ₚ in the bedroom of the house are working. With a remote controller, the user adjusts the air-conditioner 120ₘ in living room by changing its temperature from 25°C to 26°C and its wind volume from Medium to Low. Then, the user presses a "receive" button on the smart bracelet 110, and the air-conditioner 120ₘ in living room will send operation mode information indicating 26°C and low wind volume through Bluetooth to the smart bracelet 110 worn by the user. After walking into the bedroom, the user presses a "send" button on the smart bracelet 110, which sends the operation mode information to the air-conditioner 120ₚ in the bedroom. Upon receiving the operation mode information, the bedroom air-conditioner 120ₚ will accordingly set its temperature to 26°C and its wind volume to Low.

In this manner, multiple home appliances 120₁∼120ₙ in a user's house can operate in the same operation mode without having to adjust operation modes of the home appliances one by one, thereby simplifying the user's operations.

Some home appliances 120₁∼120ₙ (e.g. an air-conditioner) may require a user to be within a certain range so as to effectively serve the user. Accordingly, these home appliances may be configured to start or stop operation based on the distance between a wearable device 110 carried by the user and the home appliances 120₁∼120ₙ, wherein the distance may be determined based on a signal strength of communications between the wearable device on the user and the home appliances 120₁∼120ₙ.

Fig. 4 is a flow chart showing a method for controlling a home appliance according to another exemplary embodiment. The method is applicable to a wearable device 110. As shown in Fig. 4, the method may, in addition to what's shown in Fig. 2, include the following steps.

In step S13, operation mode information stored in the wearable device 110 is updated with the operation mode information received from the home appliance 120.

That is, the wearable device 110 only stores one or more pieces of operation mode information most recently received. When receiving a new piece of operation mode information, the wearable device 110 may automatically delete the oldest piece of operation mode information it stores, so as to save memory space.

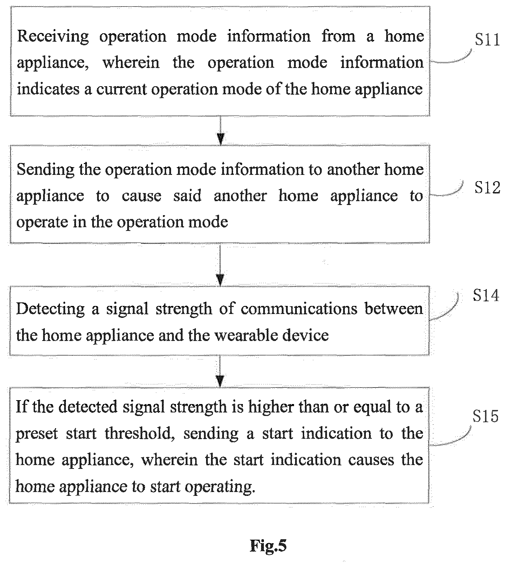

Fig. 5 is a flow chart showing a method for controlling a home appliance 120 according to yet another exemplary embodiment. The method is applicable to a wearable device 110. As shown in Fig. 5, the method may, in addition to what's shown in Fig. 2, include the following steps.

In step S14, a signal strength of communications between the home appliance 120 and the wearable device 110 is detected.

The wearable device 110 can detect the signal strength of communications between the home appliance 120 and the wearable device 110 in various manners known by a person skilled in the art. For example, the signal strength may be determined based on the time required for receiving a response from the wearable device 110 after information is sent to the wearable device 110. The longer it takes to receive the response from the wearable device 110, the weaker the signal strength is, or vice versa.

In step S15, if the detected signal strength is higher than or equal to a predetermined start threshold, a start indication is sent to the home appliance 120, wherein the start indication causes the home appliance 120 to start operating.

Here, a signal strength above or equal to a predetermined start threshold is considered to indicate that the distance between the user (who wears the wearable device 110) and the home appliance 120 is short enough for the home appliance 120 to effectively serve the user. Then, the wearable device 110 carried by the user may send a start indication to the home appliance 120, which will in turn start operating according to the received start indication.

The signal strength may be determined based on the time the time required for receiving a response from the home appliance 120 after information is sent to the home appliance 110. The longer it takes to receive the response from the home appliance 120, the weaker the signal strength is, or vice versa.

Here, the start threshold may be configured according to the specific function of the home appliance 120. For example, when the home appliance 120 is an air-conditioner, the start threshold may be set at a signal strength achievable when the user is in the room where the home appliance 120 is located.

In this embodiment, the home appliance 120 may be configured to start operating when the signal strength of the communications between the wearable device 110 and the home appliance 120 reaches a certain level. As such, a home appliance 120 may be started automatically based on the position of the user, thereby eliminating the trouble of manual operation.

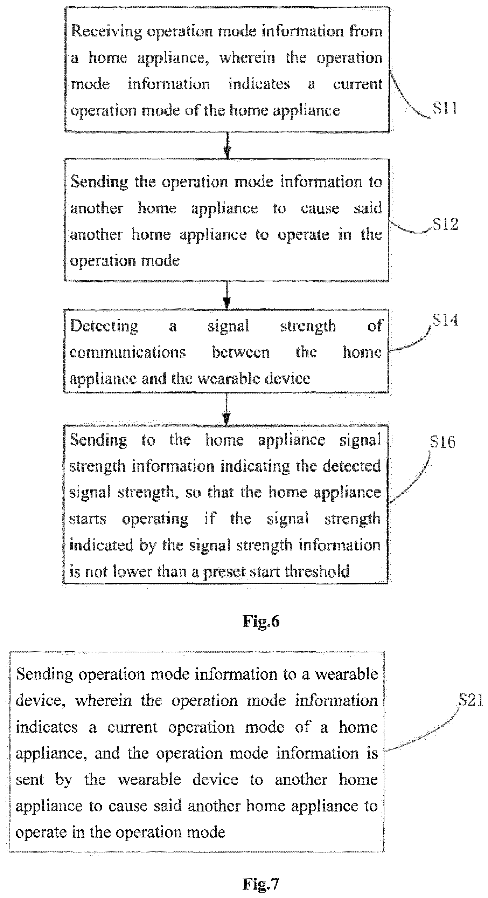

Also, a home appliance 120 may be configured to receive the signal strength information detected by a wearable device 110 and determine whether or not to start operating. Fig. 6 is a flow chart showing a method for controlling a home appliance according to yet another exemplary embodiment. The method is applicable to a wearable device 110. As shown in Fig. 6, the method may, in addition to what's shown in Fig. 2, include the following steps.

In step S14, a signal strength of communications between the home appliance 120 and the wearable device 110 is detected.

In step S16, signal strength information indicating the detected signal strength is sent to the home appliance 120, in order to cause the same to start operating if the detected signal strength indicated by the signal strength information is higher than or equal to a preset start threshold.

The embodiment shown in Fig. 6 differs from the embodiment shown in Fig. 5 in that the wearable device 110 sends the signal strength information, and the home appliance 120 is configured to determine whether a user is within an acceptable range based on the received signal strength information (i.e. whether the signal strength is above or equal to a preset start threshold), and to start or stop operation if the signal strength is above or equal to the preset start threshold.

In addition to the method for controlling a wearable device 110 described above, the present disclosure provides a method for controlling a home appliance. Fig. 7 is a flow chart showing a method for controlling a home appliance according to an exemplary embodiment. As shown in Fig. 7, the method is applicable to a home appliance 120, and includes the following steps.

In step S21, operation mode information is sent to a wearable device 110, wherein the operation mode information indicates a current operation mode of a home appliance 120ₘ, and the operation mode information is sent by the wearable device 110 to another home appliance 120ₚ to cause said another home appliance 120ₚ to operate in the operation mode.

The above step S21 corresponds to step S11. Similar to step S11, the home appliance 120ₘ may initiatively send the operation mode information after its operation mode is adjusted, while the wearable device 110 may be configured to receive the operation mode information, either at a certain time interval or continuously.

In the embodiment shown in Fig. 7, the home appliance 120ₘ may be configured to send the wearable device 110 the operation mode information but not to receive from the wearable device 110 any operation mode information. Accordingly, the home appliance 120ₘ may serve as a control center controlling other home appliances and the operation mode of the home appliance 120ₘ will not be influenced by any change in operation mode of the other home appliances. In contrast, the other home appliances may receive, through the wearable device 110, operation mode of the home appliance 120ₘ, and start working in the same mode.

In this manner, multiple home appliances 120₁∼120ₙ in a user's house can operate in the same operation mode without having to adjust operation modes of the home appliances one by one, thereby simplifying the user's operations..

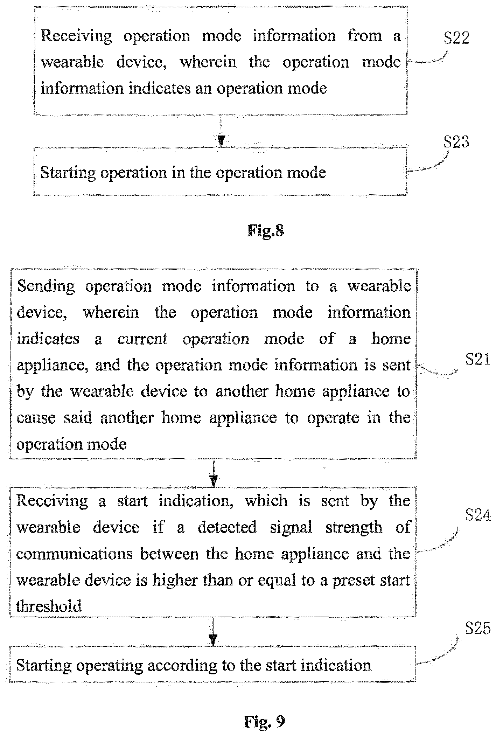

Correspondingly, some home appliances 120 may be configured to receive from the wearable device 110 operation mode information but send out none. Fig. 8 is a flow chart showing a method for controlling a home appliance 120 according to another exemplary embodiment. As shown in Fig. 8, the method includes the following steps.

In step S22, operation mode information is received from a wearable device 110, wherein the operation mode information indicates an operation mode.

In step S23, the home appliance starts operating in the operation mode.

The above steps S22 and S23 correspond to step S12. As described above, after receiving the operation mode information, the home appliance 120ₚ controls itself to operate in the operation mode indicated by the operation mode information.

It can be appreciated that, the home appliance 120 may be configured to not only send out operation mode information but also receive the same from a wearable device 110 and operates in the operation mode indicated by the received operation mode information (if its original operation mode is different from the indicated operation mode). In this manner, the home appliance 120 may be configured as both a sender and a receiver of operation mode information, thereby improving flexibility and diversifying the approaches for adjusting the operation mode.

Moreover, correspondingly to the step S15 described above, the present disclosure provides another method for controlling a home appliance 120. Fig. 9 is a flow chart showing a method for controlling a home appliance 120 according to yet another exemplary embodiment. As shown in Fig. 9, the method may, in addition to what's shown in Fig. 7, include the following steps.

In step S24, a start indication sent by the wearable device 110 is received if the signal strength of communications between the home appliance 120 and the wearable device 110 is higher than or equal to a preset start threshold.

In step S25, the home appliance starts operating according to the start indication.

The above steps S24 and S25 correspond to step S15, and are performed on a home appliance 120. As described above, a signal strength above or equal to a preset start threshold is considered to indicate that the distance between the user and the home appliance 120 is short enough for the home appliance 120 to effectively serve the user. After receiving the start indication, the home appliance 120 leaves its original state (e.g. standby) and start operating according to the start indication.

In the embodiment shown in Fig. 9, the home appliance 120 may be configured to start operating when the signal strength of communications between the wearable device 110 and the home appliance 120 reaches a certain level, so that a home appliance 120 may be started automatically based on the position of the user, thereby eliminating the trouble of manual operation.

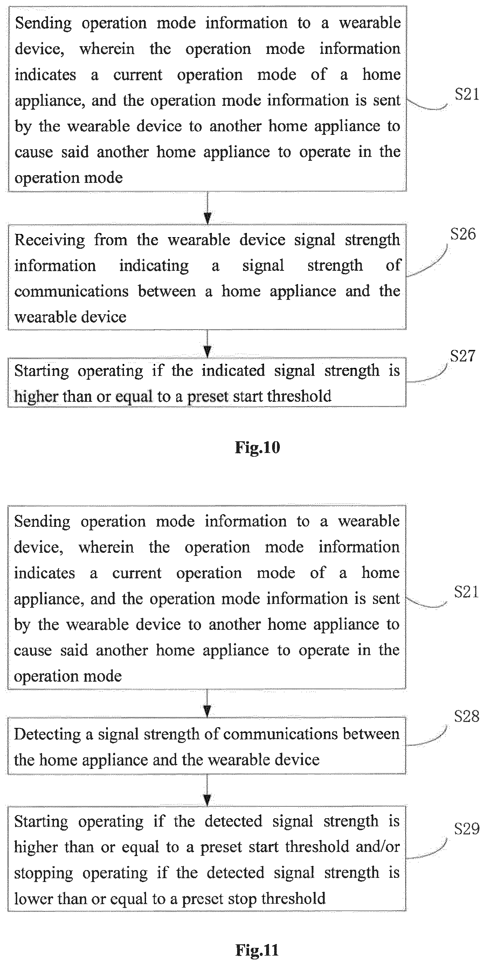

In the above embodiment, the wearable device 110 is configured to detect the signal strength and to send the start indication to the home appliance 120. Alternatively, the home appliance 120 may be configured to detect the signal strength, thereby enabling the appliance to control its start and stop. Fig. 10 is a flow chart showing a method for controlling a home appliance 120 according to yet another exemplary embodiment. The method is applicable to a home appliance 120. As shown in Fig. 10, the method may, in addition to what's shown in Fig. 6, include the following steps.

In step S26, signal strength information indicating a signal strength of communications between the home appliance 120 and the wearable device 110 is received from the wearable device 110.

In step S27, the home appliance starts operating if the detected signal strength is higher than or equal to a preset start threshold.

The above steps S26 and S27 correspond to step S17. The embodiment shown in Fig. 9 differs from the embodiment shown in Fig. 10 in that the home appliance 120 receives signal strength information, compares the signal strength against an internally stored start threshold, and determines whether or not to start operating according to the comparison. The embodiment shown in Fig. 10 has the advantage of saving memory space and reducing computational burden on the wearable device 110.

Besides, the home appliance 120 itself may detect the signal strength. Fig. 11 is a flow chart showing a method for controlling a home appliance 120 according to yet another exemplary embodiment. As shown in Fig. 11, the method may, in addition to what's shown in Fig. 6, include the following steps.

In step S28, a signal strength of communications between the home appliance 120 and the wearable device 110 is detected.

In step S29, the home appliance 120 starts operating if the detected signal strength is higher than or equal to a preset start threshold and/or stops operating if the detected signal strength is lower than or equal to a preset stop threshold.

Similar to step S14, the signal strength may be detected by using various means known by a person skilled in the art. Here, the start threshold may be configured according to the specific function of the home appliance 120. For example, when the home appliance 120 is an air-conditioner, the start threshold may be set at a signal strength achievable when the user is in the room where the home appliance 120 is located.

For example, as the user wearing a smart bracelet 110 leaves a room for another, the Bluetooth signal strength emitted by an air-conditioner 120 in the former room will diminish. When the signal strength reaches a certain threshold, the air-conditioner 120 stops operating automatically. Meanwhile, the Bluetooth signal strength radiating from an air-conditioner 120 in the latter room will increase. When the signal strength reaches a certain threshold, the second air-conditioner 120 starts operating automatically.

In this way, the home appliance 120 may control its start/stop according to this self-generated signal strength between itself and the wearable device 110, hence enabling the home appliance 120 to automatically start or stop operating according to the user's demands. Accordingly, the trouble of manual operation is eliminated and the on/off of the home appliance 120 can be controlled in a smart manner.

Instead of determining whether the relative position between the home appliance 120 and the wearable device 110 based on the signal strength therebetween, other detecting devices may also be used to detect the position of the user so as to control the on/off of the home appliance 120 according to the detected position of the user.

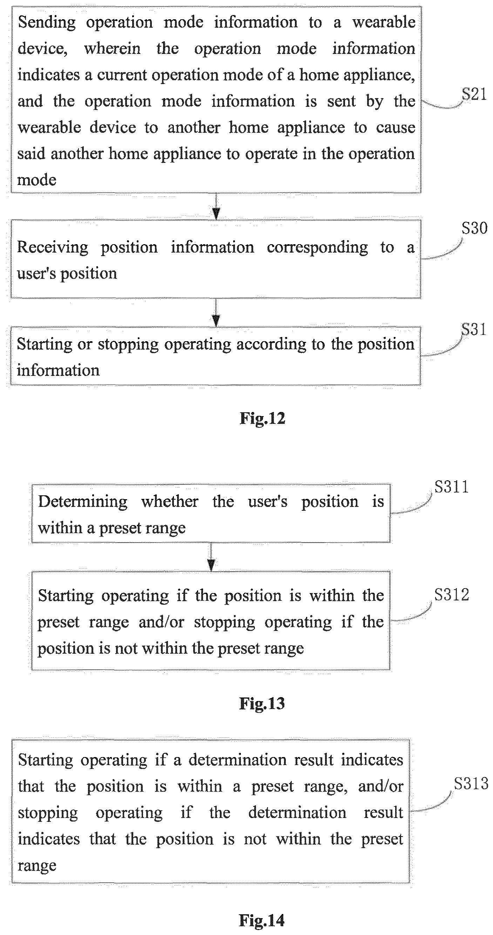

Fig. 12 is a flow chart showing a method for controlling a home appliance according to yet another exemplary embodiment. The method is applicable to a home appliance 120. As shown in Fig. 12, the method may, in addition to what's shown in Fig. 6, include the following steps.

In step S30, position information corresponding to a user's position is received.

The position information may be given out by a detecting device connected with the home appliance 120, wherein the detecting device may be an infra-red (IR) sensor, a camera, or any other device capable of detecting the position of a user. The position information may include such position and/or a result of determining whether this position is within a preset range.

For example, an IR sensor or a camera may be arranged in the room where the home appliance 120 is located in order to detect the position of a user in this room. As the IR sensor or camera senses the presence of a person, the position of that person is sent to the home appliance 120. Upon receiving the position information, the home appliance 120 will either start or stop operation according to that position information.

In step S31, the home appliance starts or stops operating according to the position information.

In particular, Fig. 13 is a flow chart of starting or stopping operation in response to position information according to an exemplary embodiment. When the position information includes a position of a user, as shown in Fig. 13, the step S31 may include the following steps:
In step S311, the home appliance determines whether the user's position is within a preset range.

In step S312, the home appliance starts operating if the position is within the preset range and/or stops operating if the position is not within the preset range.

The preset range may be such that a home appliance 120₁∼120ₙ when operating can have a certain effect on a user within the range. For instance, if the home appliance 120 is an air-conditioner, the preset range may be the room where the air-conditioner is located.

According to the embodiment of Fig. 13, a home appliance 120 can control its on/off based on the detected position of the user. Accordingly, the trouble of manual operation is eliminated and the on/off of the home appliance 120 can be controlled in a smart manner.

Fig. 14 is a flow chart of starting or stopping operation based on position information according to another exemplary embodiment. When the position information includes a result of determining whether the user's position is within a preset range, as shown in Fig. 14, the step S31 may include the following steps:
In step S313, the home appliance starts operating if the determination result indicates that the position is within the preset range and/or stops operating if the determination result indicates that the position is not within the preset range.

The embodiment shown in Fig. 14 differs from the embodiment in Fig. 13 in that: after detecting the position of a user, the detecting device determines whether the position is within a pre-defined range and sends the determination result to the home appliance 120, so that the home appliance 120 simply accepts a determination result instead of performing the step of determining.

According to the above embodiment, a home appliance 120 can control its on/off based on the detected position of the user. Accordingly, the trouble of manual operation is eliminated and the on/off of the home appliance 120 can be controlled in a smart manner.

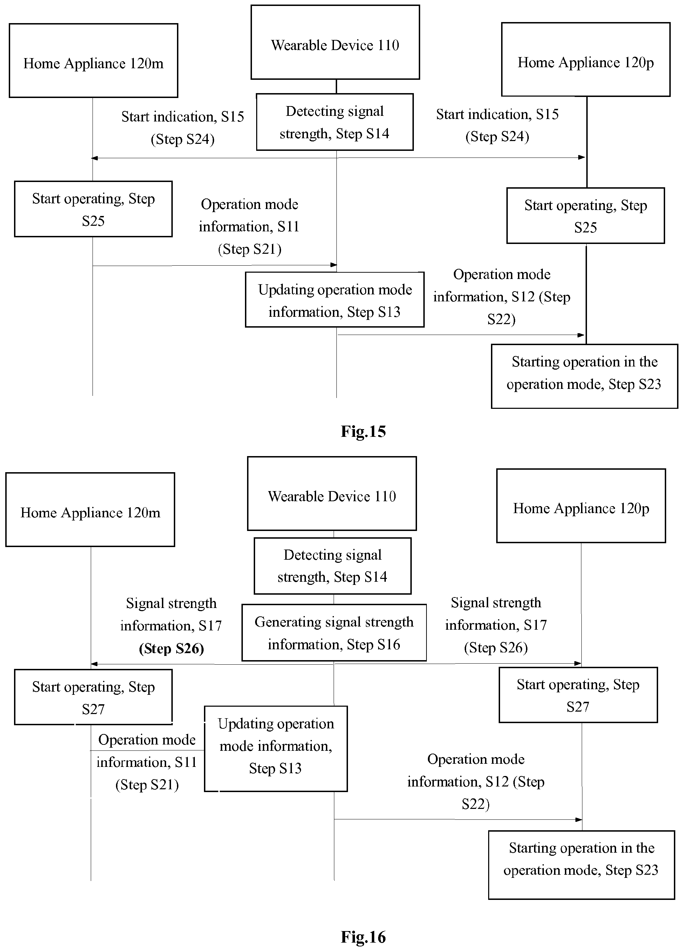

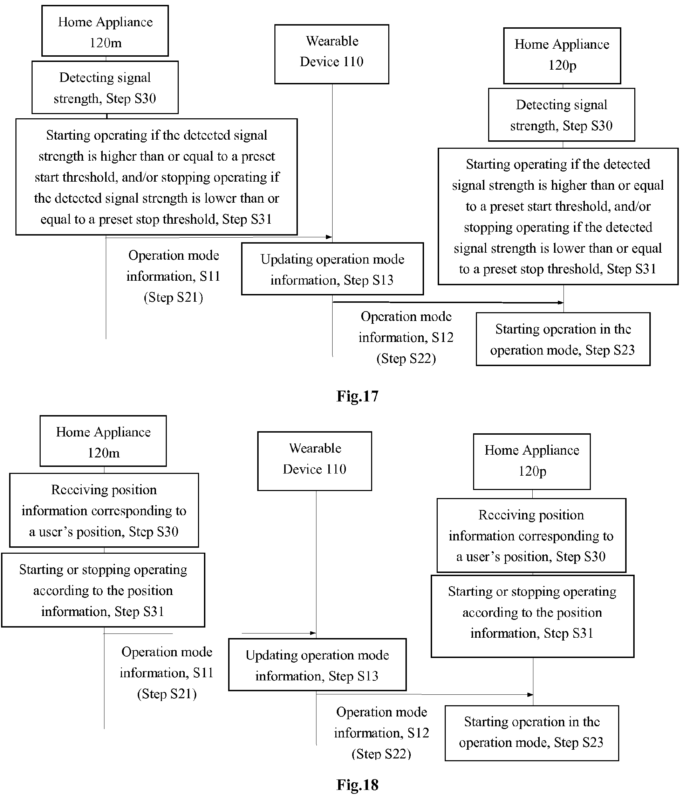

Figs. 15-18 are signaling diagrams each showing signaling exchanged between a home appliance 120 and a wearable device 110 for controlling the home appliance according to an exemplary embodiment. The steps have been detailed before and will be described redundantly.

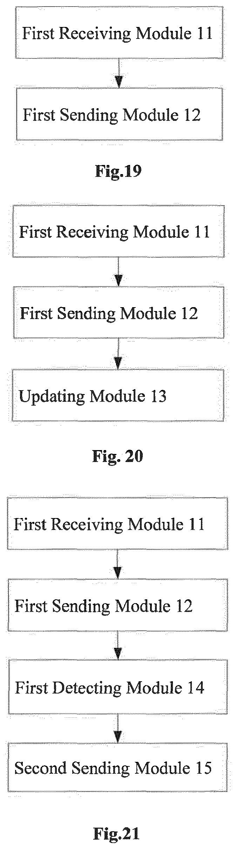

The present disclosure also provides a device for controlling a home appliance which may be configured for a wearable device 110. Fig. 19 is a block diagram showing a device for controlling a home appliance according to an exemplary embodiment. Referring to Fig. 19, the device may include a first receiving module 11 and a first sending module 12.

The first receiving module 11 is configured to receive operation mode information from a home appliance 120ₘ, wherein the operation mode information indicates a current operation mode of the home appliance 120ₘ.

The first sending module 12 is configured to send the operation mode information to another home appliance 120ₚ to cause said another home appliance 120ₚ to operate in the operation mode.

Fig. 20 is a block diagram showing a device for controlling a home appliance according to another exemplary embodiment. The device may be applicable to a wearable device 110. As shown in Fig. 20, the device may include, in addition to what's shown in Fig. 19, an updating module 13.

The updating module 13 is configured to update operation mode information stored in the wearable device 110 with the operation mode information received from the home appliance 120.

Fig. 21 is a block diagram showing a device for controlling a home appliance according to another exemplary embodiment. The device may be applicable to a wearable device 110. As shown in Fig. 21, the device may include, in addition to what's shown in Fig. 19, a first detecting module 14 and a second sending module 15.

The first detecting module 14 is configured to detect a signal strength of communications between the home appliance 120 and the wearable device 110.

The second sending module 15 is configured to, if the detected signal strength is higher than or equal to a preset start threshold, send a start indication to the home appliance 120, wherein the start indication causes the home appliance 120 to start operating.

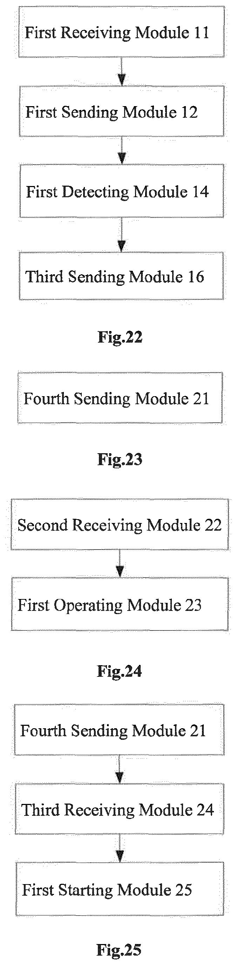

Fig. 22 is a block diagram showing a device for controlling a home appliance according to another exemplary embodiment. The device may be applicable to a wearable device 110. As shown in Fig. 22, the device may include, in addition to what's shown in Fig. 19, a first detecting module 14 and a third sending module 16.

The first detecting module 14 is configured to detect a signal strength of communications between the home appliance 120 and the wearable device 110.

The third sending module 16 is configured to send to the home appliance 120 signal strength information indicating the detected signal strength to cause the home appliance 120 to start operating if the detected signal strength indicated by the signal strength information is higher than or equal to a preset start threshold.

The present disclosure also provides a device for controlling a home appliance which may be configured for a home appliance 120. Fig. 23 is a block diagram showing a device for controlling a home appliance according to an exemplary embodiment. Referring to Fig. 23, the device may include a fourth sending module 21.

The fourth sending module 21 is configured to send operation mode information to a wearable device 110, wherein the operation mode information indicates a current operation mode of the home appliance 120, and the operation mode information is sent by the wearable device 110 to another home appliance 120ₚ to cause said another home appliance 120ₚ to operate in the operation mode.

Fig. 24 is a block diagram showing a device for controlling a home appliance according to another exemplary embodiment. The device may be configured for a home appliance 120. Referring to Fig. 24, the device may include a second receiving module 22 and a first starting module 23.

The second receiving module 22 is configured to receive operation mode information from a wearable device 110, wherein the operation mode information indicates an operation mode.

The first starting module 23 is configured to cause the home appliance to start operating in the operation mode.

Fig. 25 is a block diagram showing a device for controlling a home appliance according to another exemplary embodiment. The device may be configured for a home appliance 120. As shown in Fig. 25, the device may include, in addition to what's shown in Fig. 22, a third receiving module 24 and a first starting module 25.

The third receiving module 24 is configured to receive a start indication, which is sent by a wearable device 110 if a detected signal strength of communications between a home appliance 120 and the wearable device 110 is higher than or equal to a preset start threshold.

The first starting module 25 is configured to cause the home appliance to start operating according to the start indication.

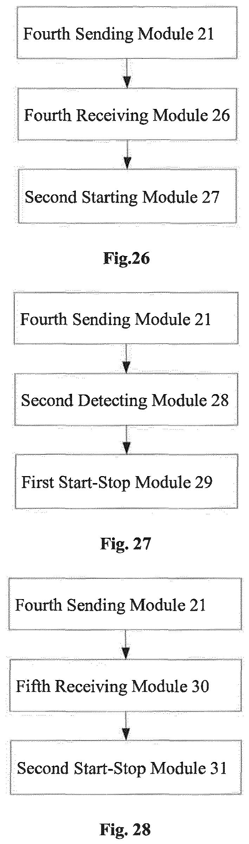

Fig. 26 is a block diagram showing a device for controlling a home appliance according to another exemplary embodiment. The device may be configured for a home appliance 120. As shown in Fig. 26, the device may include, in addition to what's shown in Fig. 22, a fourth receiving module 26 and a second starting module 27.

The fourth receiving module 26 is configured to receive from the wearable device 110 signal strength information indicating signal strength of communications between the home appliance 120 and the wearable device 110.

The second starting module 27 is configured to cause the home appliance to start operating if the indicated signal strength is higher than or equal to a preset start threshold.

Fig. 27 is a block diagram showing a device for controlling a home appliance according to another exemplary embodiment. The device may be configured for a home appliance 120. As shown in Fig. 27, the device may include, in addition to what's shown in Fig. 22, a second detecting module 28 and a first start-stop module 29.

The second detecting module 28 is configured to detect a signal strength of communications between the home appliance 120 and the wearable device 110.

The first start-stop module 29 is configured to cause the home appliance to start operating if the detected signal strength is higher than or equal to a preset start threshold and/or to stop operating if the detected signal strength is lower than or equal to a preset stop threshold.

Fig. 28 is a block diagram showing a device for controlling a home appliance according to another exemplary embodiment. The device may be configured for a home appliance 120. As shown in Fig. 28, the device may include, in addition to what's shown in Fig. 22, a fifth receiving module 30 and a second start-stop module 31.

The fifth receiving module 30 is configured to receive position information corresponding to a user's position.

The second start-stop module 31 is configured to cause the home appliance to start or stop operating according to the position information.

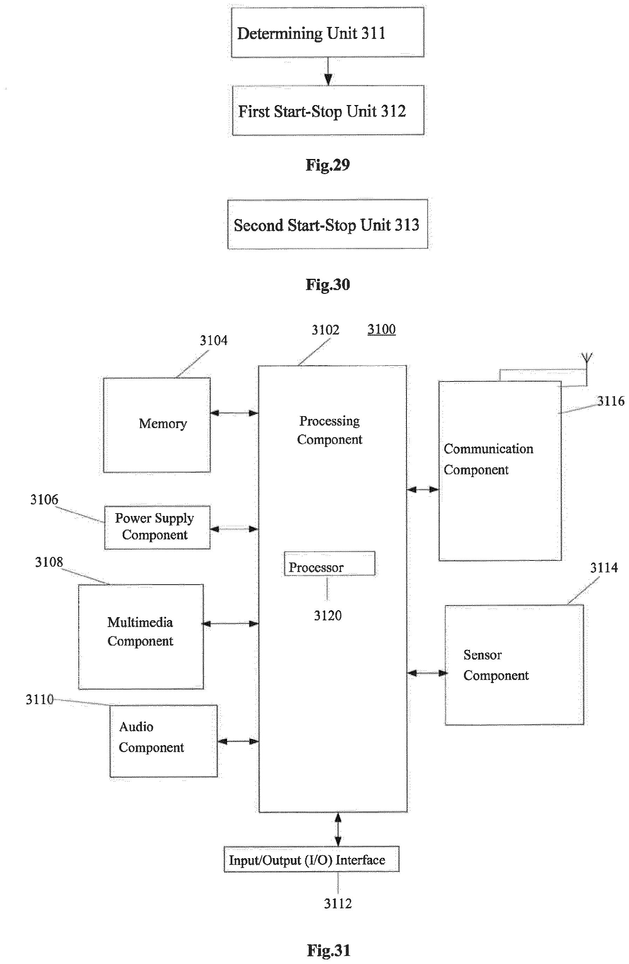

Fig. 29 is a block diagram showing a second start-stop module 31 according to an exemplary embodiment. In the embodiment shown in FIG. 29, the position information includes a position of a user, and the second start-stop module 31 includes a determining unit 311 and a first start-stop unit 312.

The determining unit 311 is configured to determine whether the user's position is within a preset range.

The first start-stop unit 312 is configured to cause the home appliance to start operating if the user's position is within the preset range and/or stop operating if the position is not within the preset range.

Fig. 30 is a block diagram showing a second start-stop module 31 according to another exemplary embodiment. In the embodiment shown in FIG 30, the position information includes a result of determining whether a user's position is within a preset range, and the second start-stop module 31 includes a second start-stop unit 313.

The second start-stop unit 313 is configured to cause the home appliance to start operating if the determination result indicates that the position is within a preset range and/or stop operating if the determination result indicates that the position is not within the preset range.

Detailed operations performed by modules of the devices in the above embodiments have been described in the embodiments of related methods, and hence will not be described in detail any more.

By implementing the device for controlling a home appliance described in the present disclosure, a wearable device 110 may be configured to receive from a home appliance operation mode information, and then send the same to another home appliance to cause the another home appliance to operate in the operation mode. This enables multiple home appliances in a user's house to operate in the same operation mode without having to adjust operation modes of the home appliances one by one, thereby simplifying the user's operations.

Fig. 31 is a block diagram showing a device 3100 for controlling a home appliance according to an exemplary embodiment. The device may be configured for a wearable device 110 or a home appliance 120. For example, the device 3100 may be a smart bracelet, a smart bracelet, smart watch, smart ring, a smart clothe piece, an air-conditioner, an air purifier or an air moistener.

Referring to Fig. 31, the device 3100 may include one or more of the following assemblies: a processing component 3102, a memory 3104, a power supply component 3106, a multimedia component 3108, an audio component 3110, an input/output (I/O) interface 3112, a sensor component 3114 and a communication component 3116.

The processing component 3102 generally controls the overall operations of the device 3100, for example, display, phone call, data communication, camera operation and record operation. The processing component 3102 may include one or more processors 3120 to implement an instruction to complete all or part of stages of the above methods for controlling a home appliance. In addition, the processing component 3102 may include one or more modules to facilitate the interaction between the processing component 3102 and other assemblies. For example, the processing component 3102 may include a multimedia module to facilitate the interaction between the processing component 3108 and the processing component 3102.

The memory 3104 is configured to store various types of data to support the operation performed on the device 3100. The examples of such data include an instruction of any application program or method, contact data, address book data, massages, pictures, videos, etc. which are operated on the device 3100. The memory 3104 may be realized with any kind of a volatile and non-volatile storage device or combination thereof, for example, Static Random Access Memory (SRAM), Electrically-Erasable Programmable Read Only Memory (EEPROM), Erasable Programmable Read Only Memory (EPROM), Programmable Read Only Memory (PROM), Read Only Memory (ROM), a magnetic memory, a flash memory, a magnetic disk or an optical disk.

The power supply component 3106 provides power for various assemblies of the device 3100. The power supply component 3106 may include a power supply management system, one or more power supplies, and other assemblies for generating, managing and distributing power to the device 3100.

The multimedia component 3108 includes a screen providing an output interface between the device 3100 and the user. In some embodiments, the screen may include a Liquid Crystal Display (LCD) and a Touch Panel (TP). If the screen includes the touch panel, the screen may be realized as a touch screen to receive an input information from the user. The touch panel includes one or more touch sensors to sense the touching, sliding and the gestures on the touch panel. The touch sensor may not only sense the touching or border of sliding gesture but only detect the duration time and pressure related to touching or sliding operation. In some embodiments, the multimedia component 3108 includes one front-facing camera and/or one rear-facing camera. When the device 3100 is in an operation mode, for example, a shooting mode or a video mode, the front-facing camera and/or the rear-facing camera may receive outside multimedia data. Each one of front-facing camera and rear-facing camera may be one fixed optical lens system or have focal length or optical zoom ability.

The audio component 3110 is configured to output and/or input audio information. For example, the audio component 3110 includes one microphone (MIC). When the device 3100 is in the operation mode, for example, a calling mode, a record mode and a speech recognition mode, the microphone is configured to receive outside audio information. The received audio information may be further stored in the memory 3104 or sent via the communication component 3116. In some embodiments, the audio component 3110 includes may include a speaker configured to output audio information.

An I/O interface 3112 provides an interface between the processing component 3102 and a peripheral interface module. The above peripheral interface module may be a keyboard, a click wheel, and button, etc. The button may include but not limit to home page button, volume button, start button and lock button.

The sensor component 3114 includes one or more sensors and is configured to provide various aspects of the assessment state for the device 3100. For example, the sensor component 3114 may detect the on/off state of the device 3100, the relative positioning of the assemblies (for example, the assemblies are display and a keypad of the device 3100), position change of the device 3100 or one component of the device 3100, presence or absence of the touch between the user and the device 3100, as well as the orientation or acceleration/deceleration and temperature change of the device 3100. The sensor component 3114 may include a proximity sensor configured to detect the presence of an adjacent object when there is not any physical contact. The sensor component 3114 may also include an optical sensor (such as CMOS or a CCD image sensor) configured to be used in imaging application. In some embodiments, the sensor component 3114 may also include an acceleration sensor, a gyro sensor, a magnetic sensor, a pressure sensor or a temperature sensor.

The communication component 3116 is configured to facilitate the wired or wireless communication between the device 3100 and other apparatuses. The device 3100 may access the wireless network based on a communication standard, such as WiFi, 2G or 3G, or a combination thereof. In one exemplary embodiment, the communication component 3116 receives a broadcast information or broadcast associated information from an external broadcast management system via a broadcast channel. In one exemplary embodiment, the communication component 3116 also includes a Near Field Communication (NFC) module to facilitate short-range communication. For example, the NFC module may be based on Radio Frequency Identification (RFID) technology, Infrared Data Association (IrDA) technology, Ultra-Wideband (UWB) technology, Bluetooth (BT) technology and other technologies.

In an exemplary embodiment, the device 3100 may be realized through one or more Application Specific Integrated Circuits (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, or other electronic elements, and configured to carry out the aforementioned method for controlling a home appliance.

In an exemplary embodiment, a non-transitory computer-readable storage medium comprising the instruction is also provided, for example, the memory 3104 including the instruction. The above instruction may be carried out by the processor 3120 of the device 3100 to complete the above method for controlling a home appliance. For example, the non-transitory computer-readable storage medium may be a ROM, a random access memory (RAM), a CD-ROM, a magnetic tape, a floppy disk, an optical data storage devices and the like.

Those skilled in the art may easily conceive other embodiments of the disclosure from consideration of the specification and practice of the present disclosure. This application is intended to cover any variations, uses, or adaptations of the invention following the general principles thereof and including such departures from the present disclosure as come within known or customary practice in the art. The specification and examples are intended to be exemplary only, with a true scope of the invention being indicated by the following claims.

It will be appreciated that the present disclosure is not limited to the exact construction that has been described above and illustrated in the accompanying drawings, and that various modifications and changes can be made without departing from the scope thereof.

## Claims

1. A home appliance control method, **characterized in that** the method is applied to a wearable device and comprises:
receiving (S11) operation mode information from a home appliance, wherein the operation mode information indicates a current operation mode of the home appliance; and
sending (S12) the operation mode information to another home appliance to cause said another home appliance to operate in the operation mode, wherein said another home appliance and said home appliance are a same kind of home appliance and operate in the operation mode.

2. The method according to claim 1, wherein the method further comprises:
updating (S13) operation mode information stored in the wearable device with the operation mode information received from the home appliance.

3. The method according to claim 1 or 2, wherein the method further comprises:
detecting (S14) a signal strength of communications between the home appliance and the wearable device; and
if the detected signal strength is higher than or equal to a predetermined start threshold, sending (S15) a start indication to the home appliance, the start indication causing the home appliance to start operating.

4. The method according to claim 1, 2 or 3, wherein the method further comprises:
detecting (S14) a signal strength of communications between the home appliance and the wearable device; and
sending (S16) to the home appliance signal strength information indicating the detected signal strength, so that the home appliance starts operating if the signal strength indicated by the signal strength information is higher than or equal to a predetermined start threshold.

5. A wearable device comprising:
a first receiving module (11) configured to receive operation mode information from a home appliance, wherein the operation mode information indicates a current operation mode of the home appliance; and
a first sending module (12) configured to send the operation mode information to another home appliance to cause said another home appliance to operate in the operation mode, wherein said another home appliance and said home appliance are a same kind of home appliance and operate in the operation mode.

6. The device according to claim 5, wherein the device further comprises:
an updating module (13) configured to update operation mode information stored in the wearable device with the operation mode information received from the home appliance.

7. The device according to claim 5 or 6, wherein the device further comprises:
a first detecting module (14) configured to detect a signal strength of communications between the home appliance and the wearable device; and
a second sending module (15) configured to send a start indication to the home appliance if the detected signal strength is higher than or equal to a predetermined start threshold, the start indication causing the home appliance to start operating.

8. The device according to claim 5, 6 or 7, wherein the device further comprises:
a first detecting module (14) configured to detect a signal strength of communications between the home appliance and the wearable device; and
a third sending module (16) configured to send to the home appliance signal strength information indicating the detected signal strength, so that the home appliance starts operating if the signal strength indicated by the signal strength information is higher than or equal to a predetermined start threshold.

9. A home appliance control device, **characterized in that** the device comprises:
a processor;
a memory storing instructions executable by the processor;
wherein the processor is configured to carry out the method of any of claims 1 to 4.

## Patentansprüche

1. Haushaltsgerätesteuerungsverfahren, **dadurch gekennzeichnet, dass** das Verfahren auf eine am Körper tragbare Vorrichtung angewendet wird und Folgendes aufweist:
Empfangen (S11) von Betriebsmodusinformationen von einem Haushaltsgerät, wobei die Betriebsmodusinformationen einen aktuellen Betriebsmodus des Haushaltsgeräts anzeigen; und
Senden (S12) der Betriebsmodusinformationen an ein weiteres Haushaltsgerät, um das genannte weitere Haushaltsgerät zu Betrieb im Betriebsmodus zu veranlassen, wobei das genannte weitere Haushaltsgerät und das genannte Haushaltsgerät eine gleiche Art von Haushaltsgerät sind und im Betriebsmodus betrieben werden.

2. Verfahren nach Anspruch 1, wobei das Verfahren ferner Folgendes aufweist:
Aktualisieren (S13) von Betriebsmodusinformationen, die in der am Körper tragbaren Vorrichtung gespeichert werden, mit den vom Haushaltsgerät her empfangenen Betriebsmodusinformationen.

3. Verfahren nach Anspruch 1 oder 2, wobei das Verfahren ferner Folgendes aufweist:
Erfassen (S14) einer Signalstärke der Kommunikation zwischen dem Haushaltsgerät und der am Körper tragbaren Vorrichtung; und,
falls die erfasste Signalstärke so hoch wie eine vorbestimmte Startschwelle oder höher ist, Senden (S15) einer Startanzeige an das Haushaltsgerät, wobei die Startanzeige das Haushaltsgerät veranlasst seinen Betrieb zu starten.

4. Verfahren nach Anspruch 1, 2 oder 3, wobei das Verfahren ferner Folgendes aufweist:
Erfassen (S14) einer Signalstärke der Kommunikation zwischen dem Haushaltsgerät und der am Körper tragbaren Vorrichtung; und
Senden (S16) von Signalstärkeinformationen an das Haushaltsgerät, die die erfasste Signalstärke anzeigen, so dass das Haushaltsgerät seinen Betrieb startet, falls die von den Signalstärkeinformationen angezeigte Signalstärke so hoch wie eine vorbestimmte Startschwelle oder höher ist.

5. Am Körper tragbare Vorrichtung, die Folgendes aufweist:
ein erstes Empfangsmodul (11), das zum Empfangen von Betriebsmodusinformationen von einem Haushaltsgerät konfiguriert ist, wobei die Betriebsmodusinformationen einen aktuellen Betriebsmodus des Haushaltsgeräts anzeigen; und
ein erstes Sendemodul (12), das zum Senden der Betriebsmodusinformationen an ein weiteres Haushaltsgerät, um das genannte weitere Haushaltsgerät zu Betrieb im Betriebsmodus zu veranlassen, konfiguriert ist, wobei das genannte weitere Haushaltsgerät und das genannte Haushaltsgerät eine gleiche Art von Haushaltsgerät sind und im Betriebsmodus betrieben werden.

6. Vorrichtung nach Anspruch 5, wobei die Vorrichtung ferner Folgendes aufweist:
ein Aktualisierungsmodul (13), das zum Aktualisieren von Betriebsmodusinformationen, die in der am Körper tragbaren Vorrichtung gespeichert werden, mit den vom Haushaltsgerät her empfangenen Betriebsmodusinformationen konfiguriert ist.

7. Vorrichtung nach Anspruch 5 oder 6, wobei die Vorrichtung ferner Folgendes aufweist:
ein erstes Erfassungsmodul (14), das zum Erfassen einer Signalstärke der Kommunikation zwischen dem Haushaltsgerät und der am Körper tragbaren Vorrichtung konfiguriert ist; und
ein zweites Sendemodul (15), das konfiguriert ist zum Senden einer Startanzeige an das Haushaltsgerät, falls die erfasste Signalstärke so hoch wie eine vorbestimmte Startschwelle oder höher ist, wobei die Startanzeige das Haushaltsgerät veranlasst seinen Betrieb zu starten.

8. Vorrichtung nach Anspruch 5, 6 oder 7, wobei die Vorrichtung ferner Folgendes aufweist:
ein erstes Erfassungsmodul, das zum Erfassen einer Signalstärke der Kommunikation zwischen dem Haushaltsgerät und der am Körper tragbaren Vorrichtung konfiguriert ist; und
ein drittes Sendemodul (16), das zum Senden von Signalstärkeinformationen an das Haushaltsgerät konfiguriert ist, die die erfasste Signalstärke anzeigen, so dass das Haushaltsgerät seinen Betrieb startet, falls die von den Signalstärkeinformationen angezeigte Signalstärke so hoch wie eine vorbestimmte Startschwelle oder höher ist.

9. Haushaltsgerätesteuervorrichtung, **dadurch gekennzeichnet, dass** die Vorrichtung Folgendes aufweist:
einen Prozessor;
einen Speicher, der vom Prozessor ausführbare Anweisungen speichert;
wobei der Prozessor zum Durchführen des Verfahrens nach einem der Ansprüche 1 bis 4 konfiguriert ist.

## Revendications

1. Procédé de commande d'appareils domestiques, **caractérisé en ce que** le procédé est appliqué à un dispositif vestimentaire et comprend :
recevoir (S11) une information de mode de fonctionnement d'un appareil domestique, où l'information de mode de fonctionnement indique un mode de fonctionnement courant de l'appareil domestique ; et
envoyer (S12) l'information de mode de fonctionnement à un autre appareil domestique pour faire que ledit autre appareil domestique fonctionne dans le mode de fonctionnement, où ledit autre appareil domestique et ledit appareil domestique sont un même genre d'appareil domestique et fonctionnent dans le mode de fonctionnement.

2. Procédé selon la revendication 1, où le procédé comprend en outre :
actualiser (S13) l'information de mode de fonctionnement stockée dans le dispositif vestimentaire avec l'information de mode de fonctionnement reçue de l'appareil domestique.

3. Procédé selon la revendication 1 ou 2, où le procédé comprend en outre :
détecter (S14) une intensité de signal de communications entre l'appareil domestique et le dispositif vestimentaire ; et
si l'intensité de signal détectée est plus élevée ou égale à un seuil de mise en marche prédéterminé, envoyer (S15) une indication de mise en marche à l'appareil domestique, l'indication de mise en marche faisant que l'appareil domestique commence à fonctionner.

4. Procédé selon la revendication 1, 2 ou 3, où le procédé comprend en outre :
détecter (S14) un intensité de signal de communications entre l'appareil domestique et le dispositif vestimentaire ; et
envoyer (S16) à l'appareil domestique l'information d'intensité de signal indiquant l'intensité de signal détectée, de sorte que l'appareil domestique commence à fonctionner si l'intensité de signal indiquée par l'information d'intensité de signal est plus élevée ou égale à un seuil de mise en marche prédéterminé.

5. Dispositif vestimentaire, comprenant :
un premier module de réception (11) configuré pour recevoir une information de mode de fonctionnement d'un appareil domestique, où l'information de mode de fonctionnement indique un mode de fonctionnement courant de l'appareil domestique ; et
un premier module d'envoi (12) configuré pour envoyer l'information de mode de fonctionnement à un autre appareil domestique pour faire que ledit autre appareil domestique fonctionne dans le mode de fonctionnement, où ledit autre appareil domestique et ledit appareil domestique sont un même genre d'appareil domestique et fonctionnent dans le mode de fonctionnement.

6. Dispositif selon la revendication 5, où le dispositif comprend en outre :
un module d'actualisation (13) configuré pour actualiser l'information de mode de fonctionnement stockée dans le dispositif vestimentaire avec l'information de mode de fonctionnement reçue de l'appareil domestique.

7. Dispositif selon la revendication 5 ou 6, où le dispositif comprend en outre :
un premier module de détection (14) configuré pour détecter une intensité de signal de communications entre l'appareil domestique et le dispositif vestimentaire ; et
un deuxième module d'envoi (15) configuré pour envoyer une indication de mise en marche à l'appareil domestique si l'intensité de signal détectée est plus élevée ou égale à un seuil de mise en marche prédéterminé, l'indication de mise en marche faisant que l'appareil domestique commence à fonctionner.

8. Dispositif selon les revendications 5, 6 ou 7, où le dispositif comprend en outre :
un premier module de détection (14) configuré pour détecter une intensité de signal de communications entre l'appareil domestique et le dispositif vestimentaire ; et
un troisième module d'envoi (16) configuré pour envoyer à l'appareil domestique l'information d'intensité de signal indiquant l'intensité de signal détectée, de sorte que l'appareil domestique commence à fonctionner si l'intensité de signal indiquée par l'information d'intensité de signal est plus élevée ou égale à un seuil de mise en marche prédéterminé.

9. Dispositif de commande d'appareils domestiques, **caractérisé en ce que** le dispositif comprend :
un processeur ;
une mémoire stockant des instructions exécutables par le processeur ;
où le processeur est configuré pour mettre en œuvre le procédé selon l'une quelconque des revendications 1 à 4.
